# EUROPÄISCHE PATENTANMELDUNG

(11) **EP 4 663 377 A1**
(43) Veröffentlichungstag der Anmeldung: **17.12.2025**
(21) Anmeldenummer: 25181940.5
(22) Anmeldetag: 11.06.2025
(51) Int. Cl.: B29C 49/42, B65G 47/244, B65G 47/86, B29C 49/06, B29K 67/00, B29L 31/00

(54) **VERFAHREN UND VORRICHTUNG ZUR HANDHABUNG EINES BEHÄLTERS**

(30) Priorität: 14.06.2024 DE 102024116856
(71) Anmelder: KHS GmbH, 44143 Dortmund (DE)
(72) Erfinder: Klöpper, Gerhard, 44143 Dortmund (DE); Lewin, Frank, 44143 Dortmund (DE); Baumgarte, Rolf, 44143 Dortmund (DE)
(74) Vertreter: Andrejewski - Honke Patent- und Rechtsanwälte Partnerschaft mbB

(57) **Zusammenfassung**

Die Erfindung betriff ein Verfahren zur Handhabung eines Behälters (2), insbesondere Kunststoffbehälters, welcher einen durch eine Mündung (3) zugänglichen Innenraum (4) umschließenden Behälterkörper (5) mit einem entlang einer Längserstreckungsachse (I) der Mündung (3) gegenüberliegenden Bodenabschnitt (5c) aufweist und mit einer Behälterführung (9) in einer Transportrichtung (T) bewegt wird. Erfindungsgemäß ist vorgesehen, dass ein Führungsteil (10) mit dem Behälter (2) in Eingriff gebracht wird, dass der Behälter (2) durch das Führungsteil (10) relativ zu der Transportrichtung (T) verdreht wird, und dass das Führungsteil (10) anschließend außer Eingriff mit dem Behälter (2) gebracht wird.

## Beschreibung

Die Erfindung betrifft ein Verfahren und eine Vorrichtung zur Handhabung eines Behälters, insbesondere Kunststoffbehälters. Der Behälter weist einen Behälterkörper auf, welcher einen durch eine Mündung zugänglichen Innenraum umschließt und einen der Mündung entlang einer Längserstreckungsachse gegenüberliegenden Bodenabschnitt aufweist. Der Behälter wird mit einer Behälterführung in einer Transportrichtung bewegt.

Behälter, insbesondere Kunststoffbehälter, welche beispielsweise aus PET gebildet sein können, müssen während unterschiedlicher Verarbeitungsschritte gehandhabt, d. h. insbesondere von einem Verarbeitungsschritt zum nächsten bewegt und übergeben werden. Bei den Verarbeitungsschritten kann es sich insbesondere um eine Behälterformung, Umformung, Befüllung, Zwischenlagerung und/oder Schließung handeln. Es besteht jedoch die Schwierigkeit, dass einige dieser Verarbeitungsschritte nur in Abhängigkeit von einer korrekten Ausrichtung ausgeführt werden können. Mit Ausrichtung ist dabei die relative Orientierung des Behälterkörpers zur (veränderlichen) Transportrichtung gemeint.

Beispielsweise wird die Form des Behälterkörpers regelmäßig durch eine Außenform in einem Umformprozess definiert. Die Entnahme aus dieser Außenform erfolgt üblicherweise entlang einer Teilungsebene der Außenform. Bei üblichen Handhabungsmaschinen - beispielsweise sogenannten Transportsternen, welche einen im Bereich der Mündung gelegenen Halsabschnitt des Behälterkörpers mit einer sogenannten Zange umgreifen, kann auf die Ausrichtung des Behälterkörpers nicht gezielt Einfluss genommen werden.

Da aufeinanderfolgende Produktionseinheiten und Handhabungsgeräte üblicherweise tangential aneinander anschließen - wobei die Bewegungs- bzw. Transportrichtung vor und hinter einem Übergabepunkt aneinander angeglichen ist - bleibt auch die Ausrichtung der Behälterkörper im Zuge der Handhabung erhalten. Dies ist jedoch nachteilig, wenn die durch einen vorangegangenen Produktionsschritt - beispielsweise eine Blasformung - vorgegebene Ausrichtung des Behälterkörpers nicht zu der notwendigen Ausrichtung in einem nachgelagerten Bearbeitungsschritt passt. So weisen insbesondere nicht-runde Behälterkörper beim Entnehmen aus einer Blasformstation regelmäßig eine "radiale" Ausrichtung auf, während für beispielsweise Bandtransport-Strecken oder Verschließautomaten eine "tangentiale" bzw. in der Transportrichtung orientierte Ausrichtung vorteilhaft bzw. erforderlich ist.

Daher war es bisher notwendig, die Ausrichtung der Behälterkörper durch eine aufwendige Anpassung der Übergabemechanik oder gesonderte Rotationseinheiten anzupassen. Somit ist bisher ein zusätzlicher apparativer Aufwand notwendig. Die ebenfalls erforderliche Justierung der beteiligten Prozesskomponenten führen zu einer geringen Flexibilität im Einsatz. Auch sind die bekannten Lösungen nicht für hohe Produktionsgeschwindigkeiten geeignet.

Vor diesem Hintergrund liegt der Erfindung die Aufgabe zugrunde, die Ausrichtung eines Behälterkörpers während der Handhabung mit einfachen und flexibel anpassbaren Mitteln anzupassen. Gegenstand der Erfindung und Lösung dieser Aufgabe ist ein Verfahren nach Anspruch 1 sowie eine Vorrichtung nach Anspruch 17. Bevorzugte Ausgestaltungen sind jeweils in den abhängigen Unteransprüchen angegeben.

Die Erfindung geht einerseits von einem Verfahren zur Handhabung eines Behälters, insbesondere Kunststoffbehälters aus, welcher einen, einen durch eine Mündung zugänglichen Innenraum umschließenden Behälterkörper mit einem entlang einer Längserstreckungsachse der Mündung gegenüberliegenden Bodenabschnitt aufweist und mit einer Behälterführung in einer Transportrichtung bewegt wird. Erfindungsgemäß ist dabei vorgesehen, dass ein Führungsteil mit dem Behälter in Eingriff gebracht wird, dass der Behälter durch das Führungsteil relativ zu der Transportrichtung verdreht wird und dass das Führungsteil anschließend außer Eingriff mit dem Behälter gebracht wird.

Im Rahmen des erfindungsgemäßen Verfahrens wird der Aspekt - d. h. die relative Ausrichtung des Behälters in Bezug auf die Transportrichtung - verändert. Vorzugsweise ist vorgesehen, dass hintereinander mehrere, insbesondere in einem kontinuierlichen Strom aufeinanderfolgende, Behälter in identischer Weise ausgerichtet werden.

Besonders bevorzugt wird der Behälter an der Behälterführung länger bewegt als dieser mit dem Führungsteil in Eingriff ist. Beispielsweise wird der Behälter durch die Behälterführung entlang einer insbesondere linearen und/oder kreisbogenförmigen Führungsbahn bewegt. Dabei ist das Führungsteil nur in einem Teilbereich der Führungsbahn im Eingriff mit dem Behälter, währenddessen die Ausrichtung des Behälters verändert wird. In dem Bereich der Führungsbahn ohne Eingriff mit dem Führungsteil bleibt die Ausrichtung des Behälters erhalten.

Während des Eingriffs wird der Behälter besonders bevorzugt relativ zu der Transportrichtung in einer einzigen Drehrichtung verdreht. Dadurch kann eine effiziente und direkte Ausrichtung bewirkt werden.

Eingriff im Sinne der Erfindung meint dabei, dass das Führungsteil mit dem Behälter, insbesondere dem Behälterkörper, vorzugsweise zumindest im Bereich des Bodenabschnitts in Überschneidung gebracht wird. Dadurch und/oder eine anschließende Bewegung des Führungsteils kommt das Führungsteil mit einer Außenseite des Behälters in Kontakt und kann dadurch auf diesen die Kräfte übertragen, um diesen zu verdrehen. Dazu ist der Behälter - insbesondere in einem zwischen dem Bodenabschnitt und der Mündung (konzentrisch um die Längserstreckungsachse) ausgebildeten Halsabschnitt um die Längserstreckungsachse drehbar an der Behälterführung gelagert.

Vorzugsweise ist die Behälterführung unabhängig von dem Führungsteil ausgebildet. Damit bildet das Führungsteil sowie dessen Antrieb und Steuerung ein unabhängiges Modul, welches in besonders einfacher Weise bei einer bestehenden Behälterführung nachgerüstet werden kann, um den Aspekt der darin bewegten Behälter anpassen zu können. Das Führungsteil ist insbesondere weder für das Tragen des Behälters noch für dessen Bewegung in der Transportrichtung erforderlich.

Durch das erfindungsgemäße Führungsteil ist es möglich, bei einer bereits bestehenden Behälterführung mit geringem Aufwand eine flexible Möglichkeit zur Ausrichtung der Behälter vorzusehen. Diese kann auch bei bereits bestehenden Anlagen und Transportstrecken nachgerüstet werden. Eine aufwändige Verdrehung des Behälters an einem Übergabepunkt zwischen aufeinanderfolgenden Handhabungseinheiten oder eine gesonderte Dreheinheit kann dabei vollständig entfallen.

In einer bevorzugten Variante des erfindungsgemäßen Verfahrens wird der Behälter verdreht, indem das Führungsteil in einer Drehbewegung um eine Drehachse rotiert wird. Rotieren meint dabei insbesondere ein Verdrehen bzw. Verschwenken um die Drehachse. Bevorzugt verläuft die Drehachse dabei parallel zu der Längserstreckungsachse - d. h. insbesondere in einer Vertikalrichtung. Gemäß einer besonders bevorzugten Ausgestaltung fluchten die Längserstreckungsachse und die Drehachse miteinander, sodass das Führungsteil gleichzeitig um die Längserstreckungsachse verdreht wird.

Vorzugsweise wird das Führungsteil mit dem Behälter in Eingriff gebracht, indem das Führungsteil in einer Hubbewegung in Richtung der Längserstreckungsachse auf den Behälterkörper, insbesondere den Bodenabschnitt aufgesetzt wird. Alternativ oder zusätzlich kann vorgesehen sein, dass das Führungsteil mit dem Behälter außer Eingriff gebracht wird, indem das Führungsteil in einer Hubbewegung in Richtung der Längserstreckungsachse von dem Behälterkörper, insbesondere dem Bodenabschnitt abgesetzt wird.

Im Rahmen des erfindungsgemäßen Verfahrens ist möglich, dass das Führungsteil zumindest teilweise das Eigengewicht des Behälters aufnehmen kann. Dadurch wird die Behälterführung entlastet. Dies ist insbesondere bei bereits befüllten Behältern von Vorteil - wie sie beispielsweise durch ein kombiniertes form-fill-Verfahren erhältlich sind, bei denen die Formgebung des Behälters und dessen Befüllung zumindest teilweise zeitgleich ablaufen. Eine solche Abstützung ist insbesondere im Rahmen eines Aufsetzens mit einer (vertikalen) Hubbewegung möglich. Ebenso kann der Behälter auf das Führungsteil - z. B. in Gestalt eines Drehtellers - aufgesetzt werden.

Gemäß einer weiteren bevorzugten Ausgestaltung der Erfindung wird das Führungsteil mit dem Behälter in Eingriff gebracht, indem das Führungsteil in einer horizontalen Aufsetzbewegung, insbesondere senkrecht zu der Längserstreckungsachse, auf den Behälterkörper aufgesetzt wird. Alternativ oder zusätzlich kann das Führungsteil mit dem Behälter außer Eingriff gebracht werden, indem das Führungsteil in einer horizontalen Absetzbewegung, insbesondere senkrecht zu der Längserstreckungsachse von dem Behälterkörper, insbesondere dem Bodenabschnitt abgesetzt wird. Der Eingriff kann hier durch eine horizontale, d. h. seitliche, Bewegung hergestellt bzw. beendet werden.

Gemäß einer besonders bevorzugten Ausgestaltung des erfindungsgemäßen Verfahrens wird die Hubbewegung des Führungsteils entlang der Längserstreckungsachse, die horizontale Aufsetzbewegung, die horizontale Absetzbewegung und/oder der Drehbewegung des Führungsteils um die Längserstreckungsachse zwangsgeführt, insbesondere mechanisch kurvengesteuert ausgeführt. Die Bewegung des Führungsteils in der Transportrichtung ist dabei vorzugsweise mit der Bewegung der Behälterführung synchronisiert. Durch diese gleichlaufende Bewegung relativ zur Umgebung können Steuerelemente (z. B. Steuerflächen und/oder Führungsbahnen) auf einen Abnehmer (z. B. eine Führungsrolle) einwirken, welche ihrerseits durch mechanische Kopplung ein Heben/Senken des Führungsteils, eine horizontale Verlagerung und/oder dessen Rotation bewirken.

Alternativ oder zusätzlich kann die Hubbewegung, die horizontale Aufsetzbewegung, die horizontale Absetzbewegung und/oder die Drehbewegung durch zumindest einen zugeordneten Antrieb ausgeführt werden. So können beispielsweise Linearmotoren oder Drehmotoren auf das Führungsteil wirken. Diese können elektrisch, hydraulisch, pneumatisch und/oder magnetisch ausgeführt sein.

Besonders bevorzugt ist vorgesehen, dass zwischen dem Führungsteil und dem Behälterkörper ein Formschluss hergestellt wird. Eine formschlüssige Verbindung liefert eine definierte Ausrichtung durch eine eindeutige Zuordnung zwischen den Geometrien des Führungsteils und des Behälterkörpers. Insbesondere wird der Formschluss zwischen dem Bodenabschnitt und dem Führungsteil hergestellt. Es kann jedoch auch eine Anlage an einer Seitenwand des Behälterkörpers zwischen dem Bodenabschnitt und der Mündung erfolgen.

Gemäß einer bevorzugten Ausgestaltung weist der Behälterkörper, insbesondere der Bodenabschnitt eine nicht-runde Außenform auf. Der Formschluss wird durch ein Umgreifen der nicht-runden Außenform durch das Führungsteil hergestellt. Die nicht-runde Außenform kann ohne Beschränkung der Erfindung polygonal, oval, elliptisch oder davon abweichende Formen umfassen, welche von einer Rotationssymmetrie um die Längserstreckungsachse abweichen. Die Erfindung ist überdies besonders zweckmäßig für Anwendungsbereiche mit nicht-runden Behälterkörpern einsetzbar. Diese weisen allgemein eine charakteristische Ausrichtung beim Entnehmen aus einem Formungsschritt, insbesondere der Außenform eines Blasformprozesses auf. Dieses ist oftmals nicht kompatibel mit der bevorzugten Ausrichtung bei weiteren Transport- und/oder Verarbeitungsschritten.

Alternativ oder zusätzlich kann vorgesehen sein, dass der Formschluss einen Eingriff des Führungsteils in einen nicht rotationssymmetrisch ausgebildeten konkaven Bereich des Bodenabschnitts umfasst. Der konkave Abschnitt ist dabei in Axialrichtung - d. h. in Richtung der Längserstreckungsachse - zugänglich. Die nicht-rotationssymmetrische Form des konkaven Bereichs kann dabei durch die Formgebung des konkaven Bereichs, darin ausgebildete Ausnehmungen und/oder darauf angeordnete Vorsprünge wie z. B. Rippen realisiert sein.

Gemäß einer bevorzugten Ausgestaltung wird der Behälter in einem Kreisbogen, insbesondere an einem Transportstern geführt. Ein sogenannter Transportstern ist eine Handhabungseinrichtung mit einer Vielzahl von an dessen Umfang ausgebildeten Transportstationen. Diese bilden jeweils eine Behälterführung im Sinne der Erfindung. Die Transportstationen weisen eine Haltevorrichtung auf, mit denen der Behälter um die Längserstreckungsachse drehbeweglich gehalten wird. Hierbei kann es sich insbesondere um sogenannte "Greifzangen" handeln, welche einen Halsabschnitt des Behälters formschlüssig und insbesondere federkraftbelastet umgreifen. Transportsterne stellen übliche Handhabungseinheiten für Behälter im Produktions- und Füllprozess dar.

Eine besonders einfache bevorzugte Ausgestaltung der Behälterführung weist eine ortsfeste Führungsbahn und zumindest eine entlang der Führungsbahn beweglich geführte Transporteinheit auf. Dabei ist der Behälter - insbesondere an einem Halsabschnitt - formschlüssig zwischen der Führungsbahn und der Transporteinheit, welche zusammen eine Transportstation bilden, eingeschlossen und geführt. Besonders bevorzugt ist die Führungsbahn kreisbogenförmig und radial außen angeordnet.

Gemäß einer besonders bevorzugten Ausgestaltung ist der Behälterkörper, insbesondere nicht-rund, mit einer Vorzugsrichtung ausgebildet. Die Vorzugsrichtung schließt an einer ersten Transportposition einen ersten Winkel mit der Transportrichtung ein. In einer zweiten Transportposition schließt die Vorzugsrichtung einen zweiten Winkel mit der Transportrichtung ein, welcher sich um mindestens 30°, vorzugsweise zumindest 45°, insbesondere zumindest 60° von dem ersten Winkel unterscheidet. Das erfindungsgemäße Verfahren ist insbesondere dazu vorgesehen, eine substantielle Änderung in der Orientierung des Behälters zu bewirken. Dabei handelt es sich nicht um eine bloße Korrektur etwaiger statistischer Fehlpositionierungen, sondern eine gezielte Anpassung für nachfolgende Verarbeitungsschritte.

Ganz besonders bevorzugt erstreckt sich die Vorzugsrichtung in einer Horizontalebene senkrecht zu der Längserstreckungsachse des Behälters. Dieser wird üblicherweise aufrecht - d. h. mit vertikal verlaufender Längserstreckungsachse - transportiert. Die Vorzugsrichtung ist dabei insbesondere diejenige Richtung, welche in der Horizontalebene senkrecht zur geringsten Erstreckung des Behälterkörpers an seiner breitesten Stelle steht. Die breiteste Stelle ist dabei insbesondere die Stelle des größten Umfangs (in Vertikalrichtung betrachtet) bzw. der größten Querschnittsfläche.

Die z. B. bei polygonalen Querschnitten nicht zwingend eindeutige Vorzugsrichtung ist somit diejenige Richtung, in der der Behälterkörper den schmalstmöglichen Durchlass geführt werden kann. Die quer, d. h. senkrecht, zur Vorzugsrichtung stehende Richtung der geringsten Breite wird auch als Querrichtung bezeichnet.

Besonders bevorzugt bezieht sich die erste Transportposition im Rahmen derErfindung auf einen Bereich bzw. Zeitpunkt vor der durch das Führungsteil durchgeführten Drehbewegung. Entsprechend bezieht sich die zweite Transportposition auf einen Bereich oder Zeitpunkt nach der erfindungsgemäßen Drehbewegung. Der Winkel-mäßige Unterschied zwischen der ersten Ausrichtung der zweiten Ausrichtung ist dabei insbesondere ausschließlich auf das erfindungsgemäße Verfahren zurückzuführen.

Vorzugsweise beträgt der erste Winkel zwischen 80° und 100°, besonders bevorzugt zwischen 85° und 95°, insbesondere ca. 90°. Eine solche auch als "radial" bzw. "quer" bezeichnete Ausrichtung ergibt sich insbesondere beim Entnehmen eines nicht-runden Behälters aus einer Außenform eines Blasform- oder form-fill-Prozesses. Dadurch muss diese Außenform beim Entnehmen des Behälters nur minimal geöffnet werden, da sich die Breite des Behälters im Wesentlichen radial aus einem sogenannten Blasrad mit mehreren an dessen Umfang angeordneten Umformstationen entnehmen lässt.

Weiterhin ist vorzugsweise vorgesehen, dass der zweite Winkel - die zweite Ausrichtung - ein Betrag von nicht mehr als 10°, insbesondere nicht mehr als 5° aufweist. Dadurch ist der (insbesondere nicht-runde) Behälter "in Transportrichtung" ausgerichtet. Dies ist beispielsweise für den Transport von Vorteil, da bei einem linearen Transport - außerhalb von rotativen Transportsternen - eine seitliche Führung vorgesehen sein kann, welche die Beibehaltung der korrekten Ausrichtung unterstützt. Auch im Rahmen von Verschließmaschinen - welche beispielsweise einen Deckel auf den Behälter aufbringen - ist diese Ausrichtung in der Transportrichtung von Vorteil.

Gemäß einer bevorzugten Ausgestaltung der Erfindung wird das Verfahren bei einer Vielzahl von gleichartigen Behältern konsekutiv durchgeführt. Dabei sind der erste Winkel und der zweite Winkel bei jedem der Behälter identisch. Das Verfahren sieht damit in dieser Ausführungsform eine deterministische UmOrientierung sämtlicher das Verfahren durchlaufender Behälter vor.

Dabei kann es vorgesehen sein, dass die Behälterführung eine Vielzahl von Transportstationen - beispielsweise Greifzangen - aufweist, welche die Vielzahl der Behälter nacheinander bewegen. Zweckmäßigerweise ist das Führungsteil - sowie gegebenenfalls seine Bewegungs-Mechanik - einer Menge von Transportstationen - insbesondere genau einer Transportstation fest zugeordnet. Es ist jedoch auch denkbar, dass ein einziges Führungsteil auf sämtliche nacheinander behandelte Behälter wirkt.

Alternativ oder zusätzlich kann jedoch auch vorgesehen sein, dass der erste Winkel und/oder der zweite Winkel einstellbar bzw. justierbar sind. Dabei kann ganz besonders bevorzugt auf eine individuelle Ausrichtung des Behälters an der ersten Transportposition Rücksicht genommen werden.

Gemäß einer besonders bevorzugten Ausgestaltung wird der Behälter zuvor aus einer Umformmaschine, insbesondere einer Streckblasmaschine, einer Füllmaschine und/oder einer kombinierten Umform- und Füllmaschine (form-fill) übernommen. Die Ausrichtung des Behälters entspricht dabei im Wesentlichen den Gegebenheiten dieser vorgelagerten Maschine.

Zweckmäßigerweise wird der Behälter anschließend an einen Verschließautomaten oder eine Band-Transporteinheit in der durch das Führungsteil veränderten Ausrichtung übergeben.

Die Erfindung betrifft auch eine Vorrichtung zur Handhabung eines Behälters, insbesondere Kunststoffbehälters, welcher einen durch eine Mündung zugänglichen Innenraum umschließenden Behälterkörper mit einem entlang einer Längserstreckungsachse der Mündung gegenüberliegenden Bodenabschnitt aufweist. Die Vorrichtung umfasst eine Behälterführung zum Bewegen des Behälters in einer Transportrichtung. Erfindungsgemäß ist ein Führungsteil vorgesehen, welches dazu eingerichtet ist, an den Behälter anzugreifen und diesen relativ zu der Transportrichtung zu verdrehen. Die Vorrichtung ist insbesondere dazu geeignet, das zuvor beschriebene erfindungsgemäße Verfahren durchzuführen.

Bevorzugt ist das Führungsteil relativ zu dem Behälter entlang der Längserstreckungsachse in einer Hubbewegung verschieblich an der Vorrichtung geführt. Durch eine solche Hubbewegung kann der Eingriff zwischen dem Führungsteil und dem Behälter hergestellt bzw. beendet werden.

Gemäß einer bevorzugten Ausführungsform ist das Führungsteil dazu eingerichtet, in einer horizontalen Aufsetzbewegung mit dem Behälter in Eingriff gebracht zu werden und/oder in einer horizontalen Absetzbewegung mit dem Behälter außer Eingriff gebracht zu werden.

Vorzugsweise ist das Führungsteil um eine, insbesondere parallel zu der Längserstreckungsachse verlaufende Drehachse in einer Drehbewegung drehbar und/oder verschwenkbar (rotierbar) angeordnet.

Das Führungsteil ist weiterhin bevorzugt dazu eingerichtet während des Eingriffs synchronisiert zu dem Behälter in der Transportrichtung bewegt zu werden.

Gemäß einer bevorzugten Ausgestaltung ist eine auf die Hubbewegung und/oder die Drehbewegung des Führungsteils wirksame mechanische Zwangsführung ausgebildet. Dabei kann es sich besonders bevorzugt um eine Kurvensteuerung handeln.

Alternativ oder zusätzlich ist zumindest ein steuerbarer Antrieb vorgesehen, welcher mit der Hubbewegung und/oder der Drehbewegung des Führungsteils gekoppelt ist. Ein individueller steuerbarer Antrieb hat dabei den Vorteil, dass auf die erfindungsgemäße Veränderung der Orientierung flexibel - und gegebenenfalls auf einen einzelnen Behälter bezogen - individuell Einfluss genommen werden kann.

Die Erfindung wird nachfolgend anhand von lediglich ein Ausführungsbeispiel darstellenden Figuren erläutert. Diese zeigen dabei schematisch:
- Fig. 1: eine perspektivische Darstellung einer erfindungsgemäßen Vorrichtung,
- Fig. 2: eine perspektivische Darstellung eines Behälters in einem Führungsteil,
- Fig. 3: eine schematische Draufsicht zu erläutern des erfindungsgemäßen Verfahrens,
- Fig. 4: eine Darstellung entsprechend der Fig. 1 mit einem alternativen Antrieb,
- Fig. 5A-D: die Funktionsweise eines alternativen Führungsteil mit horizontalen Eingriff und
- Fig. 6A-B: alternative Ausführungen des Führungsteils.

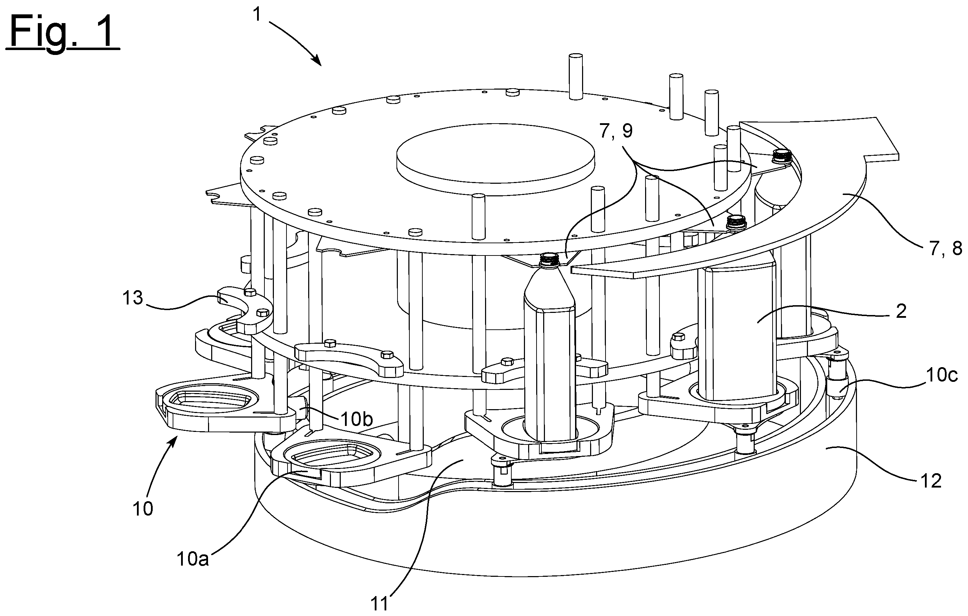

Die Fig. 1 zeigt eine erfindungsgemäße Vorrichtung 1 zur Handhabung eines Behälters 2. Die Vorrichtung 1 ist dazu eingerichtet mehrere Behälter 2 konsekutiv zu handhaben, wobei in der Figur mehrere Stadien des erfindungsgemäßen Verfahrens erkennbar sind.

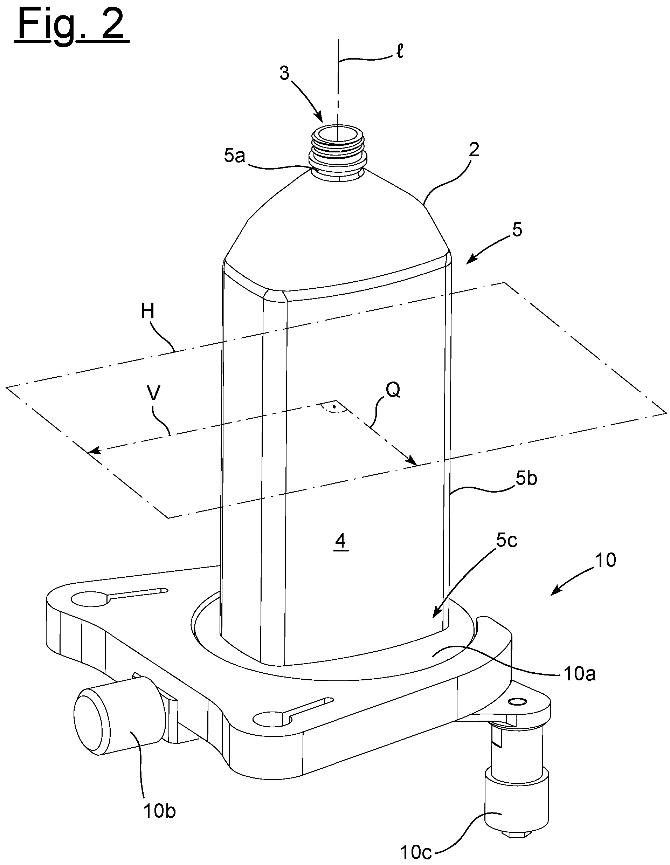

Die Behälter 2 werden aus einer nicht dargestellten Verarbeitungsstufe übernommen und der erfindungsgemäßen Handhabung in einer Transportrichtung T zugeführt. Wie man insbesondere der Fig. 2 entnehmen kann, sind die in dem Ausführungsbeispiel verwendeten Behälter 2 mit einer Mündung 3 ausgebildet, durch welche ein Innenraum 4 des Behälters 2 zugänglich ist. Der Innenraum 4 wird durch einen Behälterkörper 5 umschlossen, welcher insbesondere eine nahe der Mündung 3 gelegenen Halsabschnitt 5a, eine daran anschließende Seitenwandung 5b sowie einen entlang einer Längserstreckungsachse I der Mündung 3 gegenüberliegenden Bodenabschnitt 5c aufweist.

Der Halsabschnitt 5a ist konzentrisch und rotationssymmetrisch um die Längserstreckungsachse I ausgebildet. Im Gegensatz dazu ist der Behälterkörper 5 im Übrigen nicht-rund ausgebildet. Dieser weist eine Vorzugsrichtung V auf, welche sich in einer Horizontalebene H senkrecht zu der Längserstreckungsachse I erstreckt. Die Vorzugsrichtung V ist dabei senkrecht zu einer Querrichtung Q ausgerichtet, in der der Behälterkörper 5 in der Horizontalebene H die geringste Quererstreckung, d. h. Breite aufweist.

Im Rahmen des erfindungsgemäßen Verfahrens wird der Behälter 2 stets in einer veränderlichen Transportrichtung T durch eine Behälterführung 7 bewegt. In dem gezeigten Ausführungsbeispiel ist die Behälterführung 7 teilweise durch eine äußere Führungsbahn 8 sowie kreisbogenförmig daran geführten Transporteinheiten 9 gebildet. Wie man insbesondere der Fig. 1 entnehmen kann, wird der Halsabschnitt 5a der Behälter 2 formschlüssig zwischen den Transporteinheiten 9 und der kreisbogenförmigen Führungsbahn 8 eingeschlossen.

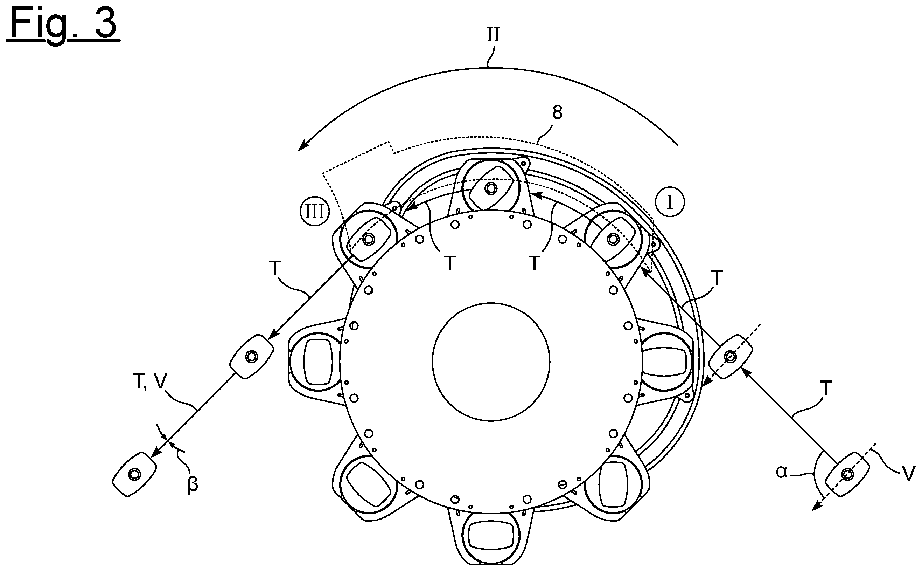

Erfindungsgemäß ist an der Vorrichtung 1 ein Führungsteil 10 ausgebildet, welches jeweils genau einem Behälter 2 zugeordnet ist. Wie man einer vergleichenden Betrachtung der Figuren 1 und 3 entnehmen kann, wird der Behälter 2 an einem ersten Übergabepunkt I an den Teil der Behälterführung 7 mit der Außenbahn 8 und den inneren Transportelementen 9 übergeben. Gleichzeitig wird das auf einer synchronisierten Kreisbahn bewegte Führungsteil 10 in axialer Richtung entlang der Längserstreckungsachse I mit einer Hubbewegung auf den Bodenbereich 5c des Behälterkörpers 5 aufgesetzt und dadurch erfindungsgemäß mit dem Behälter 2 in Eingriff gebracht. Das Führungsteil 10 umfasst dabei eine Aufnahmetasse 10a, welche den Behälterkörper 5 formschlüssig umgreift. An diesem räumlich-zeitlich ersten Übergabepunkt I schließt die Vorzugsrichtung V des Behälters 2 mit der Transportrichtung T einen ersten Winkel α ein.

Wie man insbesondere den Fig. 1 und 3 entnehmen kann, wird die Hubbewegung des Führungsteils 10 durch eine erste Führungsbahn 11 bewirkt, welche mit einer zugeordneten horizontalen Führungsrolle 10b wechselwirkt. Diese bildet eine erste mechanische Zwangsführung.

In einem nachfolgenden Schwenkbereich II wird der Behälter 2 durch das Führungsteil 10 relativ zu der Transportrichtung T verdreht, indem das Führungsteil 10 in einer Drehbewegung um die Längserstreckungsachse I gedreht wird. Die Drehung erfolgt ebenfalls Zwangsgeführt mit einer Kurvensteuerung, welche durch eine zweite Führungsbahn 12 bereitgestellt wird, in die eine vertikale Führungsrolle 10c des Führungsteils 10 eingreift. Die vertikale Führungsrolle 10c ist dabei mit einer Drehbewegung der Aufnahmetasse 10a gekoppelt.

An einem zweiten Übergabepunkt III - an dem der Behälter 2 beispielsweise an eine nicht dargestellte nachfolgende Verschließanlage übergeben oder auch (wie in Fig. 3 angedeutet) linear abgeführt werden kann - schließt die Vorzugsrichtung V mit der Transportrichtung T einen zweiten Winkel β von etwa 0° ein. Die Orientierung des Behälters 2 wurde daher zwischen dem ersten Übergabepunkt I dem zweiten Übergabepunkt III um ein Betrag von ca. 90° geändert.

Anschließend wird das Führungsteil 10 in einer der Hubbewegung entgegengesetzten Abwärtsbewegung in Richtung der Längserstreckungsachse I von dem Bodenabschnitt 5c abgesetzt und dadurch mit dem Behälter 2 außer Eingriff gebracht. Danach ist der Behälter 2 frei aus der erfindungsgemäßen Vorrichtung entnommen zu werden, um diese einem weiteren Verarbeitungsschritt wie z. B. dem Verschließen in einem Verschließautomaten zuzuleiten.

Zur zusätzlichen Stabilisierung während des Drehvorganges sind in etwa mittig Stützringe 14 ausgebildet, welche sich an einer Außenseite des Behälterkörpers 5 abstützen. Diese sind konzentrisch um die Längserstreckungsachse I ausgebildet, sodass während sämtlicher Drehstellungen eine gleichmäßige Abstützung erfolgen kann.

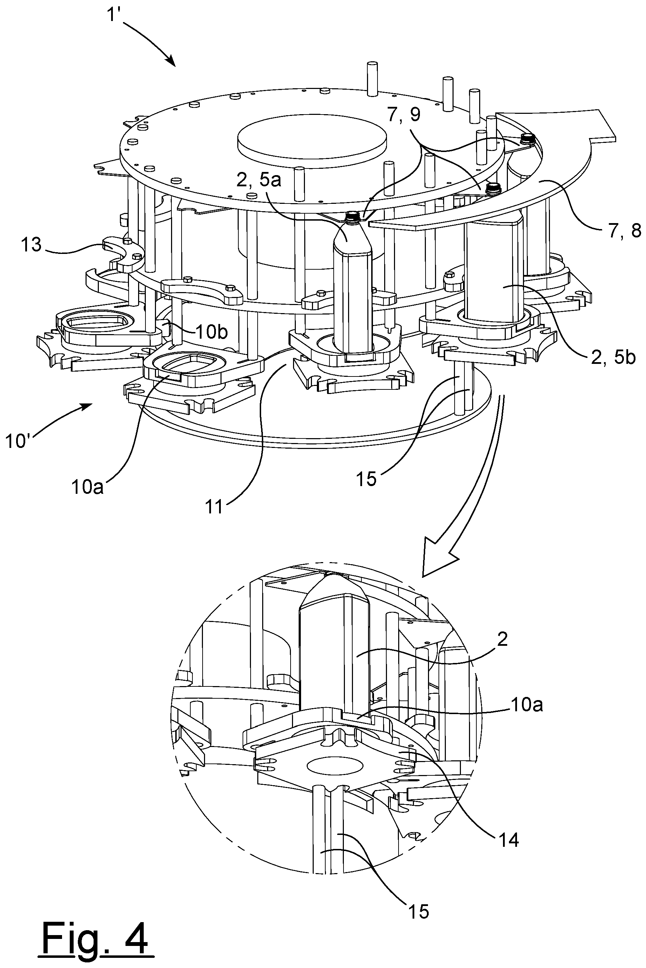

In der Fig. 4 ist eine alternative Vorrichtung 1' dargestellt, welche im Wesentlichen denselben Aufbau besitzt. Dabei entsprechen gleiche Bezugszeichen auch den gleichen Details. Das Führungsteil 10' gemäß Fig. 4 ist ebenfalls kurvengeführt mit einer ersten Führungsbahn 11 durch eine horizontale Führungsrolle 10b gekoppelt, wodurch die Hubbewegung der Aufnahmetasse 10a gesteuert wird.

Der wesentliche Unterschied zu dem Ausführungsbeispiel gemäß Fig. 1 besteht darin, dass in Fig. 4 die Drehbewegung durch ein Sternradgetriebe realisiert ist: Die Aufnahmetasse 10a wird über ein Sternrad 14 rotiert, welches im Drehbereich II mit zwei Haltestangen 15 in formschlüssigen Kontakt kommt. Dadurch wird das Sternrad 14 - und damit die Aufnahmetasse 10a bzw. der darin aufgenommene Behälter 2 um eine Vierteldrehung von 90° rotiert.

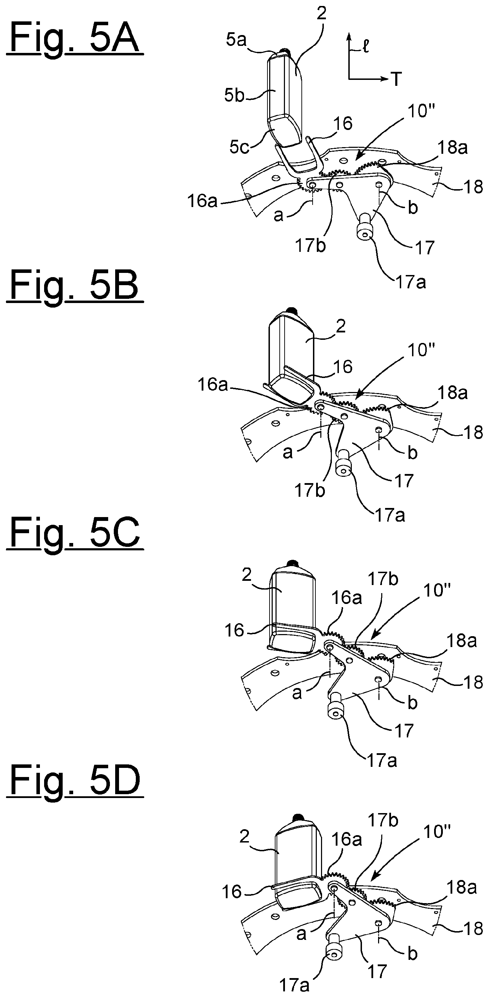

Eine alternative Ausführungsform für ein Führungsteil 10" ist in den Fig. 5A bis 5B dargestellt: Dieses alternative Führungsteil 10" weist eine Aufnahmegabel 16 auf, welche um eine vertikal verlaufende erste Schwenkachse a schwenkbeweglich an einem Führungshebel 17 gehalten ist. Der Führungshebel 17 ist seinerseits um eine parallel verlaufende zweite Schwenkachse b an einem in der Transportrichtung T mitbewegten Chassis 18 gehalten.

Durch eine - nicht dargestellte - Kurvensteuerung, welche den Schwenkhebel 17 an einer zweiten vertikalen Führungsrolle 17a leitet, wird in dem Verschwenkbereich II eine Schwenkbewegung des Schwenkhebels 17 bewirkt. Dabei wird die Aufnahmegabel 16 in einer horizontalen Aufsetzbewegung senkrecht zu der Längserstreckungsachse I auf den Behälter 2 im Bereich der unteren Seitenwandung 5b aufgesetzt.

An dem Chassis 18 ist weiterhin ein ortsfestes Zahnradsegment 18a angeordnet, welches die Schwenkbewegung des Umlenkhebels 17 nicht mit ausführt. Stattdessen greift das Zahnradsegment 18a in ein Umlenkrad 17b ein, welches am Umlenkhebel 17 mitgeführt ist. Das Umlenkrad 17b seinerseits ist mit einem Zahnprofil 16a der Aufnahmegabel 16 gekoppelt. Die Anzahl der Zähne an dem Zahnradsegment 18a und dem Zahnprofil 16a sind so gewählt, dass die Aufnahmegabel 16 bei der Schwenkbewegung des Umlenkhebels 17 eine gegenläufige Schwenkbewegung ausführt.

In den Darstellungen zwischen Fig. 5B und 5D wird eine Rotation des Behälters 2 um etwa 90° durchgeführt. Am Ende die dieser Rotation ist die Aufnahmegabel 16 so ausgerichtet, dass diese in einer horizontalen Absetzbewegung von dem Behälter 2 abgenommen werden und der Formschluss beendet werden kann.

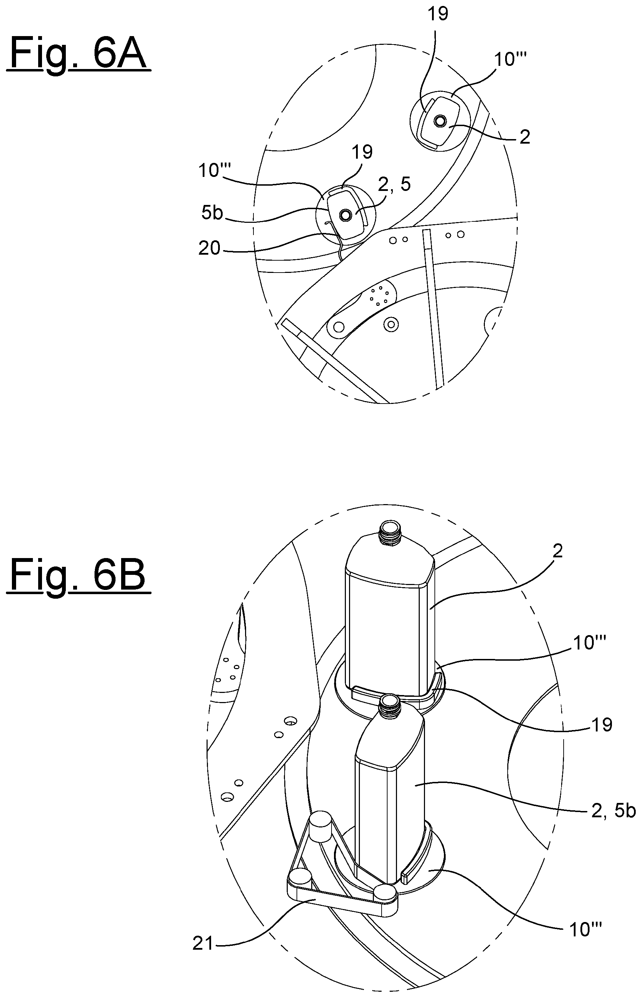

Weitere Ausführungsformen, welche mit den vorbeschriebenen kombiniert werden können, sind in den Fig. 6A und 6B dargestellt. Die Führungsteile10‴ sind dort als Drehteller ausgeführt, auf denen die Behälter 2 aufstehen. Zur Stabilisierung ist dabei jeweils ein vorspringender L-förmiger Stützrand 19 ausgebildet. Der Antrieb des Führungsteils 10‴ ist in beiden Fällen nicht dargestellt und kann ohne Beschränkung kurvengesteuert und/oder motorisch ausgebildet sein.

Um die Stabilität der Behälter 2 während der Drehbewegung zu erhalten, sind in den Figuren 6A und 6B zwei mögliche Stabilisierungsmittel ausgebildet: In dem Ausführungsbeispiel gemäß Fig. 6A ist ein Führungshebel 20 vorgesehen, welcher kurvengesteuert während des Verdrehens an der Seitenwandung 5b des Behälterkörpers 5 anliegt. Alternativ oder zusätzlich kann gemäß Fig. 6B auch ein endlos umlaufendes Führungsband 21 ausgebildet sein, welches an der Seitenwandung 5b, vorzugsweise im Bereich des Bodenabschnitts 5c außenseitig anliegt. Es sind auch Ausführungsbeispiele denkbar, in denen die Drehbewegung des Behälters 2 teilweise oder ausschließlich über ein Stabilisierungsmittel, insbesondere einen Führungshebel 20 oder ein Führungsband 21 angetrieben wird.

### Bezugszeichenliste:

- 1, 1': Vorrichtung
- 2: Behälter
- 3: Mündung
- 4: Innenraum
- 5: Behälterkörper
- 5a: Halsabschnitt
- 5b: Seitenwandung
- 5c: Bodenabschnitt
- 7: Behälterführung
- 8: Führungsbahn/Außenbahn
- 9: Behälterführung/Transporteinheiten
- 10, 10', 10", 10‴: Führungsteil
- 10a: Aufnahmetasse
- 10b: horizontale Führungsrolle
- 10c: vertikale Führungsrolle
- 11,12: erste/zweite Führungsbahn
- 13: Stützringe
- 14: Sternrad
- 15: Haltestange
- 16: Aufnahmegabel
- 16a: Zahnprofil
- 17: Schwenkhebel
- 17a: zweite vertikale Führungsrolle
- 17b: Umlenkrad
- 18: Chassis
- 18a: Zahnradsegment
- 19: Stützrand
- 20: Führungshebel
- 21: Führungsband
- a, b: erste, zweite Schwenkachse
- I: erste Transportposition/erster Übergabepunkt
- II: Schwenkbereich
- III: zweite Transportposition/zweiter Übergabepunkt
- H: Horizontalebene
- I: Längserstreckungsachse
- Q: Querrichtung
- T: Transportrichtung
- V: Vorzugsrichtung
- α: erster Winkel
- β: zweiter Winkel

## Patentansprüche

1. Verfahren zur Handhabung eines Behälters (2), insbesondere Kunststoffbehälters, welcher einen einen durch eine Mündung (3) zugänglichen Innenraum (4) umschließenden Behälterkörper (5) mit einem entlang einer Längserstreckungsachse (I) der Mündung (3) gegenüberliegenden Bodenabschnitt (5c) aufweist und welcher mit einer Behälterführung (9) in einer Transportrichtung (T) bewegt wird, **dadurch gekennzeichnet, dass** ein Führungsteil (10) mit dem Behälter (2) in Eingriff gebracht wird, dass der Behälter (2) durch das Führungsteil (10) relativ zu der Transportrichtung (T) verdreht wird und dass das Führungsteil (10) anschließend außer Eingriff mit dem Behälter (2) gebracht wird.

2. Verfahren nach dem vorangegangenen Anspruch, **dadurch gekennzeichnet, dass** der Behälter (2) verdreht wird, indem das Führungsteil (10) in einer Drehbewegung um eine, insbesondere parallel zu der Längserstreckungsachse (I) verlaufende, Drehachse rotiert wird.

3. Verfahren nach einem der vorangegangenen Ansprüche, **dadurch gekennzeichnet, dass** das Führungsteil (10) mit dem Behälter (2) in Eingriff gebracht, indem das Führungsteil (10) in einer Hubbewegung in Richtung der Längserstreckungsachse (I) auf den Behälterkörper (5), insbesondere den Bodenabschnitt (5c) aufgesetzt wird und/oder dass das Führungsteil (10) mit dem Behälter (2) außer Eingriff gebracht wird, indem das Führungsteil (10) in einer Hubbewegung in Richtung der Längserstreckungsachse (I) von dem Behälterkörper (5), insbesondere dem Bodenabschnitt (5c) abgesetzt wird.

4. Verfahren nach einem der vorangegangenen Ansprüche, **dadurch gekennzeichnet, dass** das Führungsteil (10) in Eingriff gebracht, indem das Führungsteil (10) in einer horizontalen Aufsetzbewegung, insbesondere senkrecht zu der Längserstreckungsachse (I), auf den Behälterkörper (5) aufgesetzt wird und/oder dass das Führungsteil (10) außer Eingriff gebracht wird, indem das Führungsteil (10) in einer horizontalen Absetzbewegung, insbesondere senkrecht zu der Längserstreckungsachse (I), von dem Behälterkörper (5), insbesondere dem Bodenabschnitt (5c) abgesetzt wird.

5. Verfahren nach einem der vorangegangenen Ansprüche 2 bis 4, **dadurch gekennzeichnet, dass** die Hubbewegung, die Aufsetzbewegung, die Absetzbewegung und/oder die Drehbewegung zwangsgeführt, insbesondere mechanisch kurvengesteuert ausgeführt wird.

6. Verfahren nach einem der vorangegangenen Ansprüche 2 bis 5, **dadurch gekennzeichnet, dass** die Hubbewegung, die Aufsetzbewegung, die Absetzbewegung und/oder die Drehbewegung durch einen zugeordneten Antrieb ausgeführt wird.

7. Verfahren nach einem der vorangegangenen Ansprüche, **dadurch gekennzeichnet, dass** zwischen dem Führungsteil (10) und dem Behälterkörper (5), insbesondere dem Bodenabschnitt (5c) ein Formschluss hergestellt wird.

8. Verfahren nach dem vorangegangenen Anspruch, **dadurch gekennzeichnet, dass** der Behälterkörper (5), insbesondere der Bodenabschnitt (5c), eine nicht-runde Außenform aufweist und dass der Formschluss ein Umgreifen der nicht-runden Außenform durch das Führungsteil (10) umfasst.

9. Verfahren nach Anspruch 7 oder 8, **dadurch gekennzeichnet, dass** der Formschluss einen Eingriff des Führungsteils (10) in einen nicht rotationssymmetrisch ausgebildeten konkaven Bereich des Bodenabschnitts (5c) umfasst.

10. Verfahren nach einem der vorangegangenen Ansprüche, **dadurch gekennzeichnet, dass** der Behälter (2) in einem Kreisbogen geführt ist.

11. Verfahren nach einem der vorangegangenen Ansprüche, **dadurch gekennzeichnet, dass** der Behälterkörper (5) mit einer Vorzugsrichtung (V) ausgebildet ist, dass die Vorzugsrichtung (V) an einer ersten Transportposition (I) einen ersten Winkel (α) mit der Transportrichtung (T) einschließt und dass die Vorzugsrichtung in einer zweiten Transportposition (III) einen zweiten Winkel (β) mit der Transportrichtung (T) einschließt, welcher sich um mindestens 30°, vorzugsweise zumindest 45° insbesondere zumindest 60° von dem ersten Winkel (α) unterscheidet.

12. Verfahren nach dem vorangegangenen Anspruch, **dadurch gekennzeichnet, dass** der erste Winkel (α) zwischen 80° und 100°, besonders bevorzugt zwischen 85° und 95°, insbesondere ca. 90° beträgt.

13. Verfahren nach Anspruch 11 oder 12, **dadurch gekennzeichnet, dass** der zweite Winkel (β) einen Betrag von nicht mehr als 10°, insbesondere nicht mehr als 5° aufweist.

14. Verfahren nach einem der Ansprüche 11 bis 13, **dadurch gekennzeichnet, dass** das Verfahren bei einer Vielzahl von Behältern (2) durchgeführt wird und dass der erste Winkel (α) und der zweite Winkel (β) bei jedem Behälter (2) identisch sind.

15. Verfahren nach einem der vorangegangenen Ansprüche, **dadurch gekennzeichnet, dass** der Behälter (2) zuvor aus einer Umformmaschine, einer Füllmaschine und/oder einer kombinierten Umformungs- und Füllmaschine übernommen wird.

16. Verfahren nach einem der vorangegangenen Ansprüche, **dadurch gekennzeichnet, dass** der Behälter (2) nachfolgend einem Verschließautomaten und/oder einer Band-Transporteinheit zugeführt wird.

17. Vorrichtung (1) zur Handhabung zumindest eines Behälters (2), insbesondere Kunststoffbehälters, welcher einen einen durch eine Mündung (3) zugänglichen Innenraum (4) umschließenden Behälterkörper (5) mit einem entlang einer Längserstreckungsachse (I) der Mündung (3) gegenüberliegenden Bodenabschnitt (5c) aufweist, mit einer Behälterführung (9) zum Bewegen des Behälters (2) in einer Transportrichtung (T), **gekennzeichnet durch** zumindest ein Führungsteil (10), welches dazu eingerichtet ist, an den Behälter (2) anzugreifen und diesen relativ zu der Transportrichtung (T) zu verdrehen.

18. Vorrichtung (1) nach dem vorangegangenen Anspruch, **dadurch gekennzeichnet, dass** das Führungsteil (10) relativ zu dem Behälter (2) entlang der Längserstreckungsachse (I) in einer Hubbewegung verschieblich ausgebildet ist.

19. Vorrichtung (1) nach einem der vorangegangenen Ansprüche, **dadurch gekennzeichnet, dass** das Führungsteil (10) um eine, insbesondere parallel zu der Längserstreckungsachse (I) verlaufende Drehachse in einer Drehbewegung rotierbar ausgebildet ist.

20. Vorrichtung (1) nach einem der vorangegangenen Ansprüche 18 oder 19, **dadurch gekennzeichnet, dass** zumindest eine auf die Hubbewegung und/oder die Drehbewegung des Führungsteils (10) wirksame mechanische Zwangsführung (10b, 11, 10c, 12), insbesondere Kurvensteuerung, ausgebildet ist.

21. Vorrichtung (1) nach einem der vorangegangenen Ansprüche 18 bis 20, **gekennzeichnet durch** zumindest einen steuerbaren Antrieb, welcher mit der Hubbewegung und/oder Drehbewegung des Führungsteils (10) gekoppelt ist.
